Europäisches Patentamt

European Patent Office

Office européen des brevets

(19)

(11) Veröffentlichungsnummer: **0 071 057**
**B1**

# (12) EUROPÄISCHE PATENTSCHRIFT

(45) Veröffentlichungstag der Patentschrift:
02.04.86

(51) Int. Cl.⁴: **H 04 Q 11/04, H 04 M 11/06**

(21) Anmeldenummer: **82106097.7**

(22) Anmeldetag: **08.07.82**

(54) **Fernmeldesystem mit einer Durchschalteeinrichtung für breitbandige Signale.**

(30) Priorität: **25.07.81 DE 3129467**

(43) Veröffentlichungstag der Anmeldung:
**09.02.83 Patentblatt 83/6**

(45) Bekanntmachung des Hinweises auf die Patenterteilung:
**02.04.86 Patentblatt 86/14**

(84) Benannte Vertragsstaaten:
**AT CH DE FR GB IT LI NL**

(56) Entgegenhaltungen:
**DE - A - 2 538 638**

**SECOND INTERNATIONAL CONFERENCE ON
TELECOMMUNICATION TRANSMISSION - INTO THE
DIGITAL ERA, 17.-20. März 1981, Seiten 217-220,
London, G.B., E.F. ANDERSEN et al.: "Optical digital
broadband networks of three generations"
IEEE TRANSACTIONS ON COMMUNICATIONS, Band
COM-29, Nr. 6, Juni 1981, Seiten 868-885, New York, USA
H.J. MATT et al.: "Integrated broad-band
communication using optical networks - Results of an
experimental study"**

(73) Patentinhaber: **International Standard Electric
Corporation, 320 Park Avenue, New York New
York 10022 (US)**

(84) Benannte Vertragsstaaten: **CH FR GB IT LI NL AT**

(73) Patentinhaber: **Standard Elektrik Lorenz
Aktiengesellschaft, Hellmuth-Hirth-Strasse 42,
D-7000 Stuttgart 40 (DE)**

(84) Benannte Vertragsstaaten: **DE**

(72) Erfinder: **Böttle, Dietrich, Buchenweg 14, D-7335 Salach
(DE)**

(74) Vertreter: **Beck-Seyffer, Karl Heinz, Dipl.-Ing. et al,
Standard Elektrik Lorenz AG Patent- und Lizenzwesen
Postfach 300 929 Kurze Strasse 8,
D-7000 Stuttgart 30 (DE)**

## Beschreibung

Die Erfindung betrifft ein Fernmeldesystem nach dem Oberbegriff des Hauptanspruchs.

Bei einem bekannten derartigen Fernmeldesystem werden die an den Eingängen von Videokoppelfeldern anliegenden breitbandigen Fernseh- oder Videosignale in dem Koppelfeld statisch auf eine Ausgangsleitung durchgeschaltet, die zu einem Teilnehmerendgerät führt (DE-OS 2 538 638). Durch als Multiplexer wirkende Schalter wird das zu dem Teilnehmerendgerät durchgeschaltete Breitbandsignal mit einem Schmalbandsignal, z.B. einem Fernsprechsignal, zeitlich verschachtelt. Bei diesem Fernmeldesystem ist das Koppelfeld zwar einfach aufgebaut, es sind aber teilnehmerindividuelle Multiplexer erforderlich, was zu einem grossen schaltungstechnischen Aufwand führt.

Der Erfindung liegt die Aufgabe zugrunde, ein digitales breitbandiges Fernmeldesystem zu schaffen, bei dem der pro Teilnehmer erforderliche Aufwand gering ist.

Diese Aufgabe wird erfindungsgemäss durch die Lehre des Hauptanspruchs gelöst. Zweckmässige Weiterbildungen der Erfindung sind in den Unteransprüchen gekennzeichnet.

Durch die Erfindung lässt sich der Geräteaufwand für ein Fernmeldesystem um 30% oder mehr verringern.

Ausführungsbeispiele der Erfindung werden im folgenden anhand der Zeichnung erläutert. Es zeigen:

Fig. 1 die erfindungswesentlichen Bestandteile eines breitbandigen digitalen Fernmeldesystems in schematischer Darstellung;

Fig. 2a bis Fig. 2c den Rahmenaufbau der Nachrichtensignale an verschiedenen Stellen des erfindungsgemässen Fernmeldesystems;

Fig. 3 die Durchschalteeinrichtung des Fernmeldesystems nach Fig. 1;

Fig. 4 die Ansteuersignale für die Schaltelemente der Durchschalteeinrichtung nach Fig. 3 bei einem Rahmenaufbau nach Fig. 2c, und

Fig. 5 die Durchschalteeinrichtung einer anderen Ausführung eines erfindungsgemässen Fernmeldesystems.

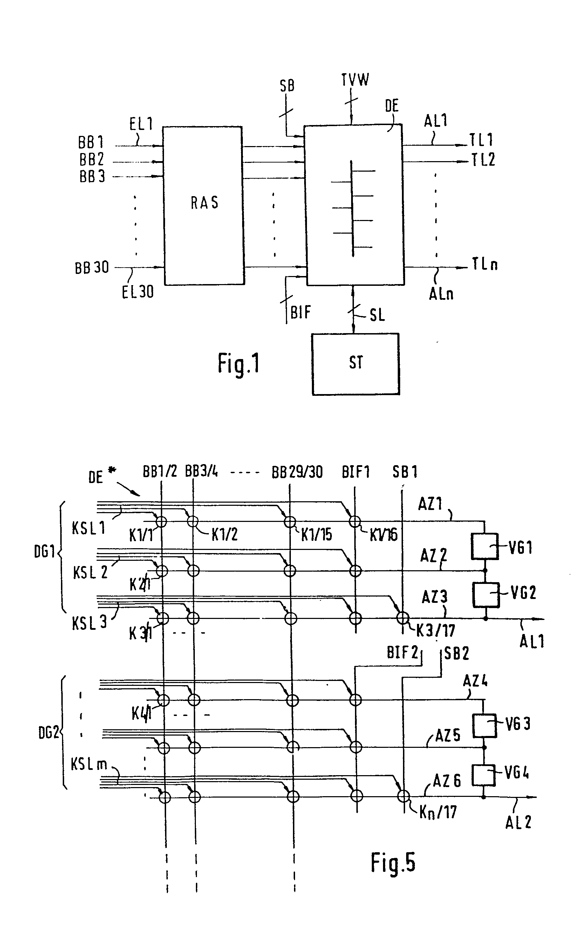

Ein digitales Fernmeldesystem (Fig. 1) weist eine Durchschalteeinrichtung DE auf, der auf Eingangsleitungen EL breitbandige Eingangs- oder Verteilsignale BB1 bis BB30 zugeführt werden. Diese Breitbandsignale werden in der Durchschalteeinrichtung DE auf zu den einzelnen Teilnehmerendgeräten TL1 bis TLn durchgeschaltet oder verteilt. Die einzelnen Durchschalteelemente oder Koppelpunkte der Durchschalteeinrichtung DE werden in einer noch zu beschreibenden Weise durch eine Steuerschaltung ST gesteuert, die über Steuerleitungen SL mit der Durchschalteeinrichtung DE verbunden ist. Dabei führt die Durchschalteeinrichtung sowohl die Funktion einer räumlichen Durchschaltung als auch einer zeitlichen Multiplexierung durch.

Die zu verteilenden Breitbandsignale BB1 bis BB30 werden, bevor sie auf den Eingangsleitungen EL zu der Durchschalteeinrichtung DE gelangen, einer Rahmenanpassungsschaltung RAS zugeführt, durch die sie zeitlich komprimiert werden und eine durch Leerbits ergänzte Zeitvielfachsignal-Rahmenstruktur erhalten (vgl. hierzu auch die Beschreibung zu den Fig. 2a bis 2c).

Die breitbandigen Verteilsignale BB1 bis BB30 sind im allgemeinen Farbfernsehsignale, einige der Breitbandkanäle können aber auch andere Signale übertragen. Ein weiteres breitbandiges Signal ist das Bildfernsprechsignal BIF, das der Durchschalteeinrichtung DE direkt zugeführt wird. Das BIF-Signal ist teilnehmerindividuell, d.h. es wird von einem bestimmten Teilnehmer des Fernmeldedienstes zu einem anderen Einzelteilnehmer vermittelt. Der Durchschalteeinrichtung DE wird ausserdem ein Schmalbandsignal SB direkt zugeführt. Derartige Schmalbandsignale sind z.B. Fernsprech-, Fernschreib-, Fernkopier-, Bildschirmtext-Signale usw.

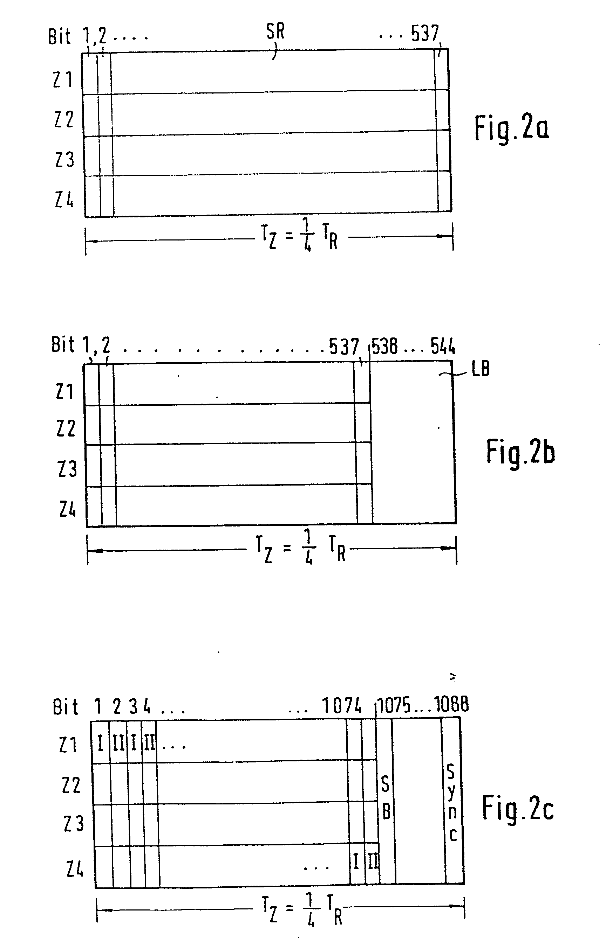

Werden die Signale BB1 bis BB30, wie beim Fernmeldesystem nach Fig. 1, im Raumvielfach angeboten, so kommt auf jeder Eingangsleitung EL ein kontinuierlicher Datenstrom mit 68,736 Mbit/s an. Für diese Signale kann z.B. ein Signalrahmen SR mit einem Aufbau, wie er aus Fig. 2a ersichtlich ist, definiert werden. Dieser Rahmen SR weist vier Zeilen Z1 bis Z4 mit je 537 Bits auf, was bei einem Bitstrom von 68,736 Mbit/s einer Rahmendauer $T_R = 31,25$ µs entspricht. Die einzelnen Breitbandsignale werden in der Rahmenanpassungsschaltung RAS (vgl. Fig. 1) umgeformt, indem nach jeweils 537 «TV-Bits» sieben Leerbits LB eingeschoben werden, dabei jedoch die Rahmendauer $T_R$ und die Zeilendauer $T_Z$ erhalten bleiben. Der Bruttobitstrom oder die Bruttobitrate werden dabei auf 69,632 Mbit/s erhöht (Fig. 2b).

Die durch die Rahmenanpassungsschaltung RAS umgeformten Verteilsignale BB1 bis BB30 sowie die teilnehmerindividuellen SB- und BIF-Signale werden der Durchschalteeinrichtung zugeführt. Das Bildfernsprechsignal BIF weist den gleichen Rahmenaufbau wie ein durch die Rahmenanpassungsschaltung umgeformtes TV-Signal auf und kann deshalb in der Durchschalteeinrichtung wie ein solches breitbandiges Signal – jedoch teilnehmerindividuell – verarbeitet werden.

Die durch die Rahmenanpassung eingefügten Leerbits LB werden in der Durchschalteeinrichtung DE vollständig oder teilweise durch Bits des Schmalbandsignals SB oder eines Synchronisationswortes SYNC ersetzt (Fig. 2c). Bei einem solchen Rahmenaufbau ist für das Schmalbandsignal SB eine Bitrate von 128 kbit/s besonders geeignet. Bei dieser Bitrate können nämlich genau vier Schmalbandbits pro Rahmen oder ein Schmalbandbit pro Zeile eingeblendet werden. Sollten aus irgendwelchen Gründen andere Bitraten und Rahmendauern gewählt werden, müsste dafür gesorgt werden, dass die Bitzahl pro Rahmen immer ganzzahlig ist. Entsprechendes gilt für das Synchronisationswort SYNC, das vorzugsweise vier Bit oder ein Vielfaches davon aufweist.

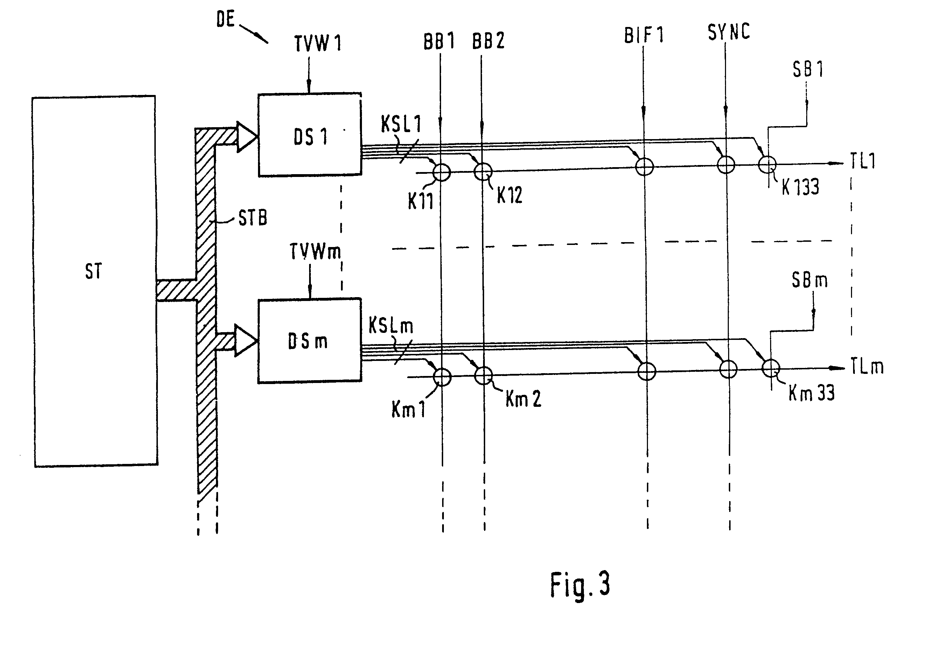

Bei der aus Fig. 3 ersichtlichen Durchschalteeinrichtung DE sind nur soviele Teile dargestellt wie zum Verständnis erforderlich. Sie weist eine matrixförmige Anordnung von Koppelpunkten oder Toren K11, K12, ..., K1–33, ..., Km1, ..., KM33, ... auf, die durch Spalten- und Zeilenleitungen miteinander verbunden sind. Auf den Spaltenleitungen liegen die in der Durchschalteeinrichtung ankommenden Breitbandsignale BB1, BB2, ..., das Synchronisierwort SYNC und die Schmalbandsignale SB1, ..., SBn an. Über die Zeilenleitungen werden die für die einzelnen Teilnehmerendgeräte bestimmten Teilnehmersignale TL1 TL2, ..., TLm, ..., TLn abgegeben.

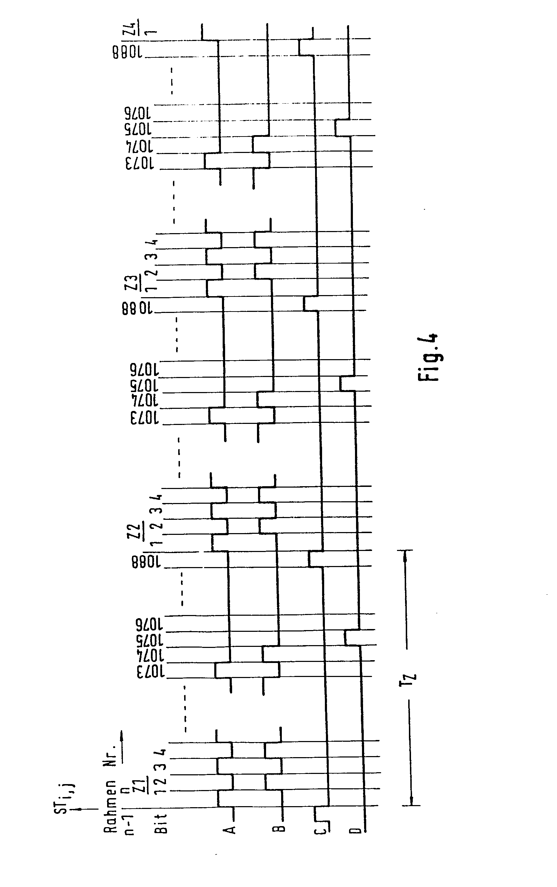

Von der zentralen Steuerung ST gelangen die zum Ansteuern der Koppelpunkte erforderlichen Steuer- und Taktsignale über einen Steuerbus STB zu dezentralen Steuerungen und Taktversorgungen DS1, ..., DSm, ..., die über Koppelpunktsteuerleitungen KSL1, ..., und KSLm, ..., mit den Koppelpunkten einer Matrixzeile verbunden sind. Die Koppelpunkte werden derart angesteuert, dass während einer Rahmenzeile – 7,8125 µs – zwei Breitbandsignale, z.B. zwei Fernsehsignale, BBi und BBj bitweise verschachtelt werden. Damit enthält eine Zeile des Signalrahmens nach Fig. 2c 537 Bits des Signals BBi, die durch I dargestellt sind, und 537 Bits des Signals BBj, die durch II dargestellt sind, und damit insgesamt 1074 Breitbandbits, z.B. TV-Bits. In die noch verbleibenden Leerstellen 1075 bis 1088 der jeweiligen Rahmenzeile Z1 bis Z4 werden Synchronisationsbits und Schmalbandbits eingeblendet, indem die mit denjenigen Spaltenleitungen, auf denen die SYNC- und SB-Signale ankommen, verbundenen Koppelpunkte, zeitrichtig angesteuert werden. Aus Fig. 4 sind die Ansteuersignale für die Koppelpunkte einer Durchschalteeinrichtung nach Fig. 3 ersichtlich. Mit diesen Ansteuersignalen ergibt sich ein Ausgangssignal mit einem Rahmenaufbau gemäss Fig. 2c. Dargestellt sind in Fig. 4 die Ansteuersignale für die Zeilen Z1 bis Z3 eines beliebigen Rahmens Nr. n. In der obersten Zeile A sind die Ansteuersignale der Koppelpunkte zum Durchschalten eines Breitbandsignals BBi, z.B. eines Fernseh- oder eines Bildfernsprech-Signals, dargestellt. In der zweiten Zeile B sind die Koppelpunkt-Ansteuersignale zum Durchschalten eines Breitbandsignals BBj, in der dritten Zeile C die Ansteuersignale zum Durchschalten des Synchronisierwortes SYNC und in der vierten Zeile D die Ansteuersignale zum Durchschalten der Schmalbandsignale SB dargestellt. Die Dauer $T_Z$ einer Rahmenzeile beträgt, wie bereits erwähnt 7,8125 µs, wobei die Rahmendauer $T_R = 4 \cdot T_Z$ ist.

Die Auswahl der zu einer Teilnehmerendeinrichtung durchzuschaltenden Breitbandsignale, z.B. die Auswahl eines TV-Programms, erfolgt über ein Auswahlsignal TVW1, ..., TVWn, das über einen Rückkanal von dem Teilnehmer zu der dezentralen Steuerung DS1, ... der Durchschalteeinrichtung DE gelangt (vgl. Fig. 3).

Die aus Fig. 5 ersichtliche Durchschalteeinrichtung wird in einem Fernmeldesystem verwendet, in dem die Breitbandsignale (TV-Signale oder BIF-Signale) als Zeitmultiplexsignale mit jeweils 140 Mbit/s (genau 139, 264 Mbit/s) vorliegen, weil sie z.B. über eine PCM-Übertragungsstrecke in dieser Form übertragen werden. Jedes auf einer Eingangsleitung zu der Durchschalteeinrichtung gelangende Signal enthält hier zwei Breitbandkanäle BB1/2, BB3/4, ..., BB29/30, die z.B. einen Rahmenaufbau nach Fig. 2c aufweisen können. Auf weiteren Eingangsleitungen gelangen die teilnehmerindividuellen Bildfernsprechsignale BIF1, BIF2, ... und die ebenfalls teilnehmerindividuellen Schmalbandsignale SB1, SB2, ... zu den Spaltenleitungen der Durchschalteeinrichtung DE*. In dieser werden die Breitbandsignale im Raum- und Zeitvielfach vermittelt und die teilnehmerindividuellen Schmalbandsignale in die dafür vorgesehenen Lücken eingefügt. Das BIF-Signal muss mit einem Bitstrom von 139,264 Mbit/s angeliefert werden. Dabei entspricht der Rahmenaufbau dem von Fig. 2c, es ist aber nur einer der beiden Breitbandkanäle mit BIF-Signalen besetzt.

Die matrixförmig angeordneten Koppelpunkte K1/1, K1/2, ..., Kn/17 der Durchschalteeinrichtung DE* werden über die Bündel Steuerleitungen KSL1, KSL2, ..., KSLn derart angesteuert, dass sie die Eingangsspalten mit den Ausgangszeilen verbinden. Die Steuerschaltungen sind in der Zeichnung nicht dargestellt. Eine Rahmenanpassungsschaltung ist bei diesem Fernmeldesystem nicht erforderlich, da die Eingangssignale bereits den erforderlichen Rahmenaufbau aufweisen. Die Durchschalteeinrichtung DE* ist aus Durchschaltegruppen DG1, DG2, ..., aufgebaut, die den einzelnen Ausgangsleitungen AL1, AL2, ... zugeordnet sind, und die aus jeweils drei mit ihren Signalausgängen zeilenförmig zusammengefassten Koppelpunktreihen AZ1, AZ2, AZ3, ... bestehen. Die Koppelpunktreihe AZ3 ist direkt mit der Ausgangsleitung AL1 verbunden, die zu dem der Durchschaltegruppe DG1 zugeordneten Teilnehmerendgerät führt. Die Koppelpunktreihe AZ2 ist mit dieser Ausgangsleitung über ein Verzögerungsglied VG2 und die Koppelpunktreihe AZ1 über dieses und ein weiteres Verzögerungsglied VG1 verbunden. Je nach der für die gewünschte Durchschaltung oder Vermittlung von Nachrichtensignalen erforderlichen zeitlichen Lage wird eine dieser drei Koppelpunktreihen oder -Zeilen AZ1, AZ2 und AZ3 angesteuert. Weist z.B. der durchzuschaltende TV-Kanal bereits die gewünschte Zeitlage auf, so muss er in der Durchschalteeinrichtung DE* nicht mehr zeitlich verschoben werden; er wird über die Koppelpunktzeile AZ3 auf die Ausgangsleitung AL1 durchgeschaltet.

Soll dagegen ein Signal auf dem Kanal I, d.h. dem Kanal mit ungeraden Bitstellen, zum Kanal II, d.h. dem Kanal mit geraden Bitstellen vermittelt werden, so wird das Signal des Kanals I mit Hilfe des Zeitglieds VG2 um ein Bit verzögert, d.h.

es wird über die mittlere Koppelpunktzeile AZ2 zu der Ausgangsleitung AL1 durchgeschaltet. Bei einer Vermittlung von dem Kanal II zu dem Kanal I wird das Signal über die obere Koppelpunktzeile AZ1 zu der Ausgangsleitung AL1 durchgeschaltet, so dass das Signal die beiden Verzögerungsglieder VG1 und VG2 durchläuft. Bei einem Rahmenaufbau nach Fig. 2c muss das zu vermittelnde Breitbandsignal dabei um insgesamt 14 Bit verschoben werden, wobei das Verzögerungsglied VG1 eine zeitliche Verschiebung $\tau_1 = 14$ Bit $- \tau_2 = 13$ Bit bewirkt.

Die zu der Durchschalteeinrichtung DE* im Zeitmultiplex gelangenden breitbandigen Eingangssignale BB1/2, BB3/4, ... enthalten bereits die erforderliche Synchronisationsinformation. Deshalb kann in der Durchschalteeinrichtung DE* auf die zusätzliche Einblendung von Synchronisationswörtern verzichtet werden.

Die Steuersignale für die Durchschalteeinrichtung DE* entsprechen den aus Fig. 4 ersichtlichen Steuersignalen, wobei aber das in der Zeile C dargestellte SYNC-Signal entfällt. Die Steuersignale STi für das Breitbandsignal BBi und STj für das Breitbandsignal BBj werden entsprechend dem Vermittlungswunsch auf eine der drei Koppelpunktzeilen AZ1, AZ2 oder AZ3 gegeben. Die erforderlichen Koppelpunkte werden durch die zentrale Steuerung aufgrund des von dem Teilnehmer stammenden Vermittlungswunsches ausgewählt und angesteuert.

Über einzelne der Breitbandkanäle BB1, ... BB 29/30 werden anstelle von TV-Programmen auch bis zu 70 Stereo-Rundfunkprogramme oder eine entsprechend höhere Anzahl von Mono-Rundfunkprogrammen übertragen.

### Patentansprüche

1. Fernmeldesystem mit einer Durchschalteeinrichtung (DE) für breitbandige Signale (BB1, ..., BIF) und Schmalbandsignale (SB1, SB2, ...), die der Durchschalteeinrichtung (DE) eingangsseitig zugeführt und in ihr auf ausgangsseitig zu den einzelnen Teilnehmerendgeräten führende Leitungen (AL1, AL2, ...) durchgeschaltet werden, und mit einer die Schaltelemente (K11, K12, ...) der Durchschalteeinrichtung (DE) steuernden Steuerschaltung (ST), dadurch gekennzeichnet, dass die Schaltelemente (K11, ...) so durchgeschaltet werden, dass an die zu dem jeweils angesteuerten Teilnehmerendgerät führende Ausgangsleitung (AL1, ...) direkt ein Zeitvielfachsignal (TL1, TL2, ...) abgegeben wird, das mindestens zwei Breitbandsignale (BB1, BB2) und ein Schmalbandsignal (SB1) enthält.

2. Fernmeldesystem nach Anspruch 1, dadurch gekennzeichnet, dass der Durchschalteeinrichtung (DE) eine Rahmenanpassungsschaltung (RAS) vorgeschaltet ist, durch die zumindest ein Teil der eingehenden Breitbandsignale (BB1, BB2 ...) zeitlich komprimiert und der Zeitvielfachsignalrahmen durch Leerbits (LB) ergänzt wird.

3. Fernmeldesystem nach Anspruch 1, dadurch gekennzeichnet, dass die Eingangsleitungen (EL1, EL2, ...) der Durchschalteeinrichtung (DE*) als Zeitvielfachleitungen ausgebildet sind, durch die je zwei zeitlich verschachtelte Breitbandsignale (BB1/2) der Durchschalteeinrichtung (DE*) zugeführt werden, und dass diese mit einer zeitliche Verschiebungen der durchzuschaltenden Signale ermöglichenden Zeitschaltstufe (VG1, VG2) versehen ist.

4. Fernmeldesystem nach Anspruch 3, dadurch gekennzeichnet, dass die Durchschalteeinrichtung (DE*) den einzelnen Ausgangsleitungen (AL1, ...) zugeordnete Durchschaltegruppen (DG1, DG2) aufweist, die aus drei mit ihren Signalausgängen zeilenförmig zusammengefassten Koppelpunktreihen (AZ1, AZ2, AZ3) besteht, von denen eine (AZ3) direkt, die zweite (AZ2) über ein Verzögerungsglied (VG2) und die dritte (AZ1) über zwei Verzögerungsglieder (VG1, VG2) mit der Ausgangsleitung (AL1) verbunden sind.

5. Fernmeldesystem nach einem der Ansprüche 2 bis 4, dadurch gekennzeichnet, dass zusätzliche Breitbandsignale (BIF), die die gleiche Rahmenstruktur wie die Ausgangssignale der Rahmenanpassungsschaltung (RAS) oder wie die zeitlich verschachtelten Eingangssignale der Durchschalteeinrichtung (DE*) aufweisen, der Durchschalteeinrichtung (DE*) zugeführt werden.

### Claims

1. Communication system with a switching matrix (DE) for broadband signals (BB1, ..., BIF) and narrowband signals (SB1, SB2, ...) which are applied to the input side of the switching matrix (DE) and switched therein to lines (AL1, AL2, ...) leading to the individual subscriber terminals and with a control (ST) which controls the switching elements (K11, K12, ...) of the switching matrix (DE), characterised in that the switching elements (K11, ...) are switched through in such a way that a time division multiplex signal (TL1, TL2, ...) containing at least two broadband signals (BB1, BB2) and one narrowband signal (SB1) is delivered directly to the output line (AL1, ...) leading to the selected subscriber terminal.

2. A communication system as claimed in Claim 1, characterised in that the switching matrix (DE) is preceded by a framing circuit (RAS) by which at least part of the incoming broadband signals (BB1, BB2, ...) are compressed in time and by which the time division multiplex frame is supplemented with blank bits (LB).

3. A communication system as claimed in Claim 1, characterised in that the input leads (EL1, EL2, ...) of the switching matrix (DE*) are time division multiplex buses over each of which two time-interleaved broadband signals (BB1/2) are applied to the switching matrix (DE*), and that the switching matrix has a timing stage (VG1, VG2) enabling the signals which are to be switched through to be shifted in time.

4. A communication system as claimed in Claim 3, characterised in that the switching matrix (DE*) contains switching units (DG1, DG2) associated with the individual output leads (AL1, ...) and each consisting of three switching-point rows (AZ1, AZ2, AZ3) combined in the form of lines with their signal outputs, one of which (AZ3) is connected to the output lead (AL1) directly, and the second (AZ2) and third (AZ1) of which are connected to the output lead (AL1) via one delay element (VG2) and two delay elements (VG1, VG2) respectively.

5. A communication system as claimed in any one of Claims 2 to 4, characterised in that additional broadband signals (BIF) having the same frame structure as the output signals of the framing circuit (RAS) or as the time-interleaved input signals of the switching matrix (DE*) are applied to the switching matrix (DE*).

**Revendications**

1. Système de communication comprenant un agencement de commutation (DE) pour des signaux à large bande (BB1, ... BIF) et des signaux à bande étroite (SB1, SB2, ...), lesquels sont appliqués aux entrées de l'agencement de commutation (DE) et, dans celui-ci, sont commutés sur des conducteurs de sortie (AL1, AL2, ...) conduisant à des équipements individuels d'abonnés, et un circuit de commande (ST) commandant des éléments de commutation (K11, ...) de l'agencement de commutation (DE), caractérisé en ce que les éléments de commutation (K11, ...) sont actionnés de manière qu'il est directement fourni, sur le conducteur de sortie (AL1, ...) conduisant à chaque équipement d'abonné sélectionné, un signal à multiplexage temporel (TL1, TL2, ...), contenant au moins deux signaux à large bande (BB1, BB2) et un signal à bande étroite (SB1).

2. Système de communication selon la revendication 1, caractérisé en ce que l'agencement de commutation (DE) est précédé par un circuit de constitution de trame (RAS), par lequel au moins une partie des signaux à large bande entrants (BB1, BB2 ...) sont comprimés dans le temps et la trame à multiplexage temporel est complétée par des bits de remplissage (LB).

3. Système de communication selon la revendication 1, caractérisé en ce que les conducteurs d'entrée (EL1, EL2, ...) de l'agencement de commutation (DE*) sont des lignes à multiplexage temporel par chacune desquelles deux signaux à large bande (BB1/2) entrelacés sont fournis à l'agencement de commutation (DE*) et en ce que celui-ci est pourvu d'étages de temporisation (VG1, VG2) permettant le déplacement dans le temps des signaux commutés.

4. Système de comunication selon la revendication 3, caractérisé en ce que l'agencement de commutation (DE*) est pourvu de groupes de commutation (DG1, DG2) associés aux conducteurs de sortie (AL1, AL2, ...) individuels de l'agencement de commutation (DE*), chacun d'eux étant formé de trois rangées de points de couplage aux sorties interconnectées (AZ1, AZ2, AZ3), connectées au conducteur de sortie, la première (AZ3) directement, la deuxième (AZ2), par l'intermédiaire d'un circuit de temporisation (VG2) et la troisième (AZ1), par l'intermédiaire de deux circuits de temporisation (VG1, VG2).

5. Système de communication selon l'une des revendications 2 à 4, caractérisé en ce que des signaux à large bande additionnels (BIF) ayant la même structure de trame que les signaux de sortie du circuit de constitution de trame (RAS) ou que les signaux d'entrée entrelacés de l'agencement de commutation (DE*) sont fournis à l'agencement de commutation (DE*).

Fig.1

Fig.5

Fig.2a

Fig.2b

Fig.2c

Fig. 3

Fig. 4